# EUROPÄISCHE PATENTANMELDUNG

(11) **EP 0 911 662 A2**
(43) Veröffentlichungstag der Anmeldung: **28.04.1999**
(21) Anmeldenummer: 98114823.2
(22) Anmeldetag: 06.08.1998
(51) Int. Cl.: G02B 6/38

(54) **Anordnung zur Einkopplung von Licht und optischer Steckverbinder mit einer solchen Anordnung**

(30) Priorität: 25.09.1997 DE 19742398
(71) Anmelder: SIEMENS AKTIENGESELLSCHAFT, 80333 München (DE)
(72) Erfinder: Birnbaum, Roland, 73433 Aalen (DE); Bauer, Jürgen, 67373 Dudenhofen (DE)

(57) **Zusammenfassung**

Bei einer Anordnung zur Einkopplung von Licht mit einem zwischen einer Lichtleitfaser (1) und einem EO-Wandler (4) angeordneten optischen System (6) besteht dieses aus einem Linsenfernrohr, welches von einem Kepler- oder Galilei-Fernrohr gebildet wird und eine Einkopplung mit relativ einfachen Mitteln ermöglicht. Die Anordnung ist vorteilhaft bei optischen Steckverbindern anwendbar.

## Beschreibung

Die Erfindung betrifft eine Anordnung zur Einkopplung von Licht, mit einem zwischen einer Lichtleitfaser und einem elektrooptischen (EO-)Wandler angeordneten optischen System sowie einen optischen Steckverbinder mit einer solchen Anordnung.

Bei der Kopplung von elektrooptischen (EO-)Sendern (z. B. LED, Laserdiode) und/oder elektrooptischen (EO-)Empfängern (z. B. Photodioden, Phototransistoren) und einer lichtleitenden Faser ergibt sich das Problem, daß der abstrahlende Lichtkegel nur teilweise von der empfangenden Gegenfläche aufgefangen wird. Dies führt zu hohen Verlusten der einzukoppelnden Lichtenergie und damit zu einer Verschlechterung des Wirkungsgrades. Zur Verringerung dieser Übergangsverluste versucht man, die sendende und die empfangende Fläche radial möglichst genau zueinander auszurichten und axial möglichst nahe zueinander zu bringen. Dazu ist ein Ausgleich der Fertigungstoleranzen erforderlich. Außerdem wird versucht, einen möglichst großen Teil des Lichtbündels auf die optisch aktive Gegenfläche zu lenken.

Aus der US-A-4,895,425 ist ein optischer Steckverbinder bekannt, bei dem sogenannte Ferrulen vorgesehen sind, welche als hochgenaue Führungskörper in Nut- oder Hülsenform die lichtleitende(n) Faser(n) positionieren. Diese Ferrulen sind innerhalb des Steckverbinders beweglich und richten sich beim Steckvorgang genau zu der Geometrie des gegenüberliegenden optischen Elementes aus. Ferrulen werden aus Metall und Keramik sowie zunehmend auch aus Kunststoffen hochgenau gefertigt und sind zum Toleranzausgleich in axialer Richtung auf der Faserseite gefedert. Dabei tritt das Problem auf, daß eine Zugentlastung auf die Faser, wie sie zum Beispiel beim Verlegen auftreten kann, zu einer Längenänderung entgegen der Federkraft führt, wodurch sich aufgrund des vergrößerten Abstandes zum EO-Wandler erhöhte optische Kopplungsverluste einstellen.

Der Erfindung liegt die Aufgabe zugrunde, bei einer Anordnung der eingangs genannten Art eine einfache Lösung für eine möglichst vollständige und verlustfreie Einkopplung eines für die Übertragung zur Verfügung stehenden Strahlenbündels in eine Lichtleitfaser bzw. einen EO-Wandler anzugeben.

Diese Aufgabe wird bei einer Anordnung der eingangs genannten Art gemäß der Erfindung dadurch gelöst, daß das optische System aus einem Linsenfernrohr besteht.

Bei der erfindungsgemäßen Anordnung erfolgt die Einkopplung des Lichts in die Lichtleitfaser bzw. in den EO-Wandler mittels eines Linsenfernrohres, also mit einem Kepler- oder einem Galilei-Fernrohr. Dies hat den Hauptvorteil, daß die Verbesserung der Einkopplung mit relativ einfachen Mitteln erzielt wird.

Wenn das Linsenfernrohr aus einem Galilei-Fernrohr besteht, ergibt sich gegenüber dem Kepler-Fernrohr der Vorteil einer geringeren Baulänge. Dies ist vor allem dann von Bedeutung und besonderem Vorteil, wenn die Anordnung zur Einkopplung von Licht bei einem optischen Steckverbinder verwendet wird.

Dabei ist es besonders vorteilhaft und kostengünstig, wenn das Galilei-Fernrohr auf zwei optische Flächen reduziert und von einem einzigen Linsenkörper mit einer konkaven und einer konvexen optischen Wirkfläche gebildet ist, so daß eine sogenannte 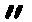 afokale Linse" entsteht. Zweckmäßigerweise ist dieser Linsenkörper aus einem transparenten Polymerwerkstoff, zum Beispiel aus Polymethylmethacrylat (PMMA) gefertigt und in eine mechanisch starre Funktionseinheit, zum Beispiel in einen Tubus, axial federnd in einem Gehäuse, zum Beispiel einem Kupplungsteil eines optischen Steckverbinders, gelagert, wobei die Feder vorteilhafterweise direkt an den Linsenkörper mit angespritzt werden kann. Eine derartige Anordnung ist hinsichtlich des erforderlichen Ausgleiches verschiedener Toleranzen optimiert, ermöglicht eine gekapselte, geschützte Ausführung der Anordnung und läßt sich mit geringen Herstellungskosten realisieren.

In jedem Fall ist es vorteilhaft, wenn die Linsen des Fernrohrs in einer mechanisch starren Funktionseinheit zusammengefaßt sind. Dadurch bleiben die Linsen des Fernrohrs dauerhaft justiert.

Ferner ist es vorteilhaft, wenn eine oder mehrere asphärisch gekrümmte optische Flächen angewendet werden. Die asphärisch gekrümmte(n) optische(n) Fläche(n) kann bzw. können dabei zur Verbesserung der Bündelung des Lichtes eingesetzt werden, oder auch zur Verteilung des Strahlengangs auf nicht punktförmige, längliche, allgemein unregelmäßige oder auch mehrere elektrooptische Wandler.

Eine erfindungsgemäße Anordnung läßt sich besonders vorteilhaft bei einem optischen Steckverbinder einsetzen.

Vorteilhafte Ausgestaltungen des Gegenstandes des Anspruchs 1 sowie eines optischen Steckverbinders mit einer erfindungsgemäßen Anordnung sind in den Unteransprüchen angegeben.

Die Erfindung wird im folgenden anhand eines in der Zeichnung dargestellten Anwendungs- und Ausführungsbeispieles näher erläutert. Es zeigen jeweils bei einem optischen Steckverbinder als Anwendungsbeispiel
- Figuren 1 und 2: eine Anordnung mit einem als Kepler-Fernrohr ausgebildeten Linsenfernrohr vor dem Steckvorgang bzw. im gesteckten Zustand, jeweils im Schnitt,
- Figuren 3 und 4: eine den Figuren 1 und 2 entsprechende Darstellung einer Anordnung mit einem als Galilei-Fernrohr ausgebildeten Linsenfernrohr,
- Figuren 5 und 6: eine den Figuren 3 und 4 entsprechende Darstellung einer Anordnung mit einem einteiligen Galilei-Fernrohr und
- Figur 7: eine weitere Ausführung mit einem Galilei-Fernrohr.

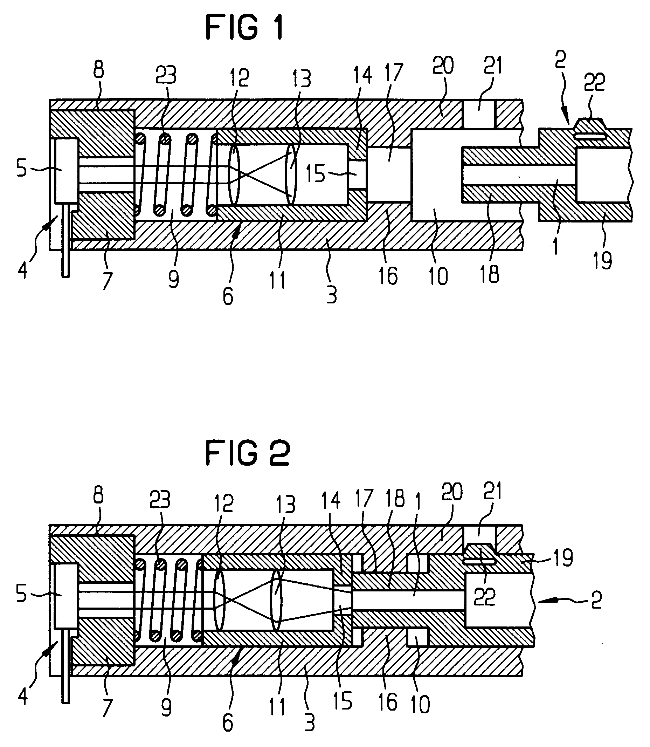

Der optische Steckverbinder nach den Figuren 1 und 2 besteht aus einem eine Lichtleitfaser 1 umfassenden Stecker 2 und einem das Kupplungs-Gegenstück des optischen Steckverbinders darstellenden Gehäuse 3, welches einen elektrooptischen (EO-) Wandler 4, zum Beispiel eine Photodiode 5 und ein optisches System 6 zur Einkopplung von Licht enthält. Der EO-Wandler 4 ist so aufgebaut, daß die Photodiode 5 in einem Halter 7 angeordnet ist, der seinerseits starr in einen an einem Ende des Gehäuses 3 offenen ersten Bohrungsabschnitt 8 eingesetzt ist. An diesen ersten Bohrungsabschnitt 8 schließt sich ein längerer zweiter Bohrungsabschnitt 9 an, der eine geringere Innenweite hat und zur Aufnahme des optischen Systems 6 dient. Das optische System 6 besteht aus einem Linsenfernrohr, welches einen rohrähnlichen, länglichen Tubus 11 mit Linsen 12 und 13 umfaßt. Der Tubus 11 dient also als Träger für die Linsen, die somit in einer mechanisch starren Funktionseinheit zusammengefaßt sind und dadurch dauerhaft justiert bleiben. Bei dem Ausführungsbeispiel in den Figuren 1 und 2 ist das Linsenfernrohr 12, 13 von einem Kepler-Fernrohr gebildet. Zwischen dem Halter 7 der Photodiode 5 und der offenen Seite des Tubus 11 ist in den zweiten Bohrungsabschnitt 9 noch eine Feder 23 eingesetzt, gegen deren Kraft der Tubus 11 mit dem Linsenfernrohr 12, 13 axial in dem zweiten Bohrungsabschnitt 9 verschiebbar ist. Am anderen Ende weist der Tubus 11 einen Boden 14 mit einer Licht-Durchtrittsöffnung 15 auf, wobei der Tubus im ungekuppelten Zustand des Steckverbinders an einer Stufe 16 anliegt. Diese Stufe 16 besitzt ebenfalls eine Durchtrittsöffnung 17, die hier so bemessen ist, daß der Hals 18 des Steckerkörpers 19 bei der Kupplung von Gehäuse 3 und Stecker 2 in ihr passend geführt durch die Stufe 16 hindurchtreten kann. Steckerseitig ist das Gehäuse 3 im Anschluß an die Stufe 16 noch mit einem größeren, endseitig offenen dritten Bohrungsabschnitt 10 ausgebildet, der hier so bemessen ist, daß der Steckerkörper 19 beim Kuppeln darin passend geführt ist. Im gekuppelten Zustand (Figur 2) sind der Stecker 2 und das Gehäuse 3 miteinander verrastet. Hierzu ist die Gehäusewandung 20 mit einer Ausnehmung 21 für eine am Steckerkörper 19 vorgesehene, seitlich abgeschrägte Rastnase 22 ausgebildet.

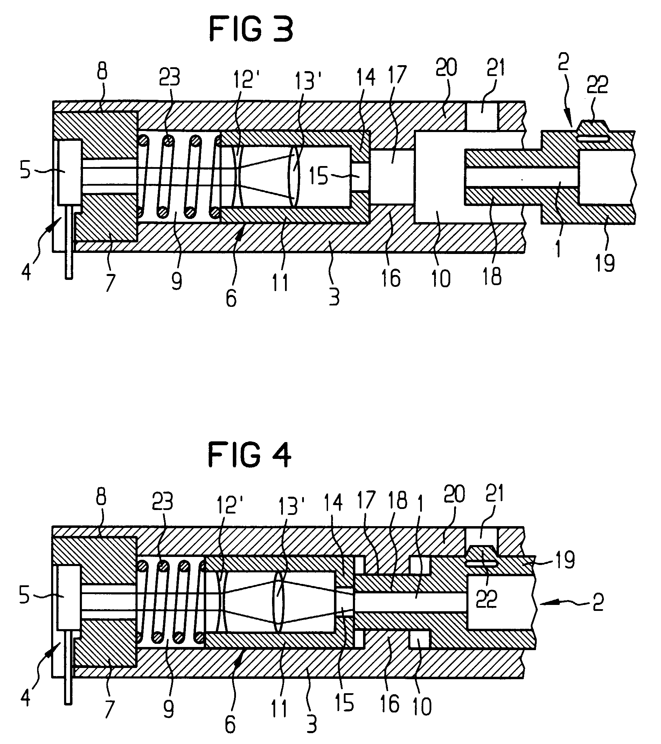

Das Ausführungsbeispiel in den Figuren 3 und 4 unterscheidet sich von dem Ausführungsbeispiel in den Figuren 1 und 2, bei dem das Linsenfernrohr von einem Kepler-Fernrohr gebildet ist, lediglich dadurch, daß hier das Linsenfernrohr von einem Galilei-Fernrohr 12', 13' gebildet ist. Im übrigen sind für gleiche Elemente und Bereiche des optischen Steckverbinders dieselben Bezugszeichen verwendet wie in den Figuren 1 und 2.

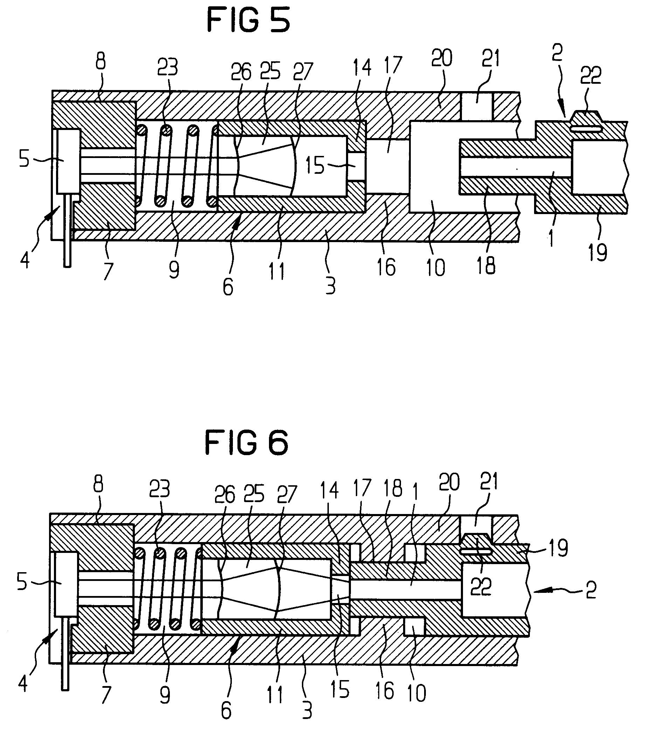

In den Figuren 5 und 6 ist ein bevorzugtes Ausführungsbeispiel eines optischen Steckverbinders mit einem Galilei-Fernrohr gezeigt. Hierbei ist das Galilei-Fernrohr einteilig ausgeführt, das heißt es ist auf zwei optische Flächen reduziert und von einem einzigen Linsenkörper 25 mit einer konkaven optischen Wirkfläche 26 und einer konvexen optischen Wirkflächen 27 und damit von einer sogenannten 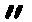 afokalen Linse" gebildet. Auch der Linsenkörper 25 ist wie bei den Ausführungsbeispielen in den Figuren 1 bis 4 in einem Tubus 11 angeordnet. Ansonsten entspricht der Aufbau dieses optischen Steckverbinders wiederum dem Aufbau der vorher beschriebenen Ausführungsbeispiele, so daß für gleiche Elemente und Bereiche des optischen Steckverbinders ebenfalls dieselben Bezugszeichen verwendet sind.

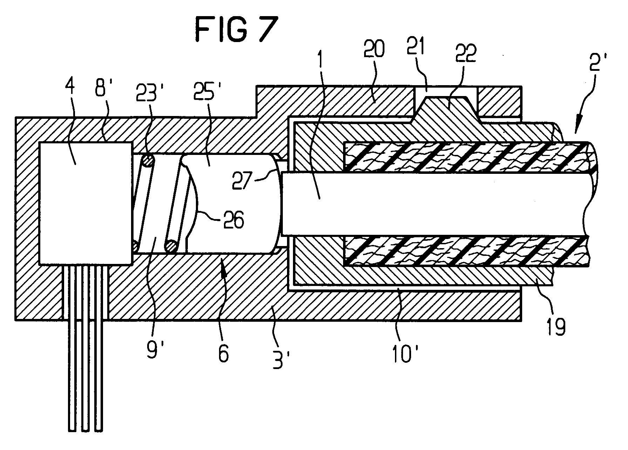

Bei allen Ausführungsbeispielen - also auch bei dem nachfolgend anhand von Figur 7 beschriebenen Ausführungsbeispiel - besteht die Linse 25 des Fernrohrs bzw. bestehen die Linsen 12, 13 und 12', 13' des jeweiligen Linsenfernrohrs zweckmäßigerweise aus einem optisch transparenten Polymer, zum Beispiel aus Polymethylmethacrylat (PMMA). In diesem Fall können die Fernrohrlinsen direkt in den Träger der mechanisch starren Funktionseinheit, also zum Beispiel in den Tubus 11, eingespritzt werden. Es ist auch möglich, daß der Träger der mechanisch starren Funktionseinheit durch Umspritzen der Linsen mit einem Polymer direkt gebildet ist. Bei diesem Spritzvorgang müssen die Wirkflächen der Linse(n) in der Spritzform geschützt sein.

Bei den Ausführungsbeispielen in den Figuren 1 bis 6 ist die das Linsenfernrohr umfassende mechanisch starre Funktionseinheit, also der Tubus 11 selbst innerhalb des optischen Steckverbinders, das heißt in dem zweiten Bohrungsabschnitt 9 des Gehäuses 3, mittels der Feder 23 axial federnd gelagert. Damit sind die Fernrohrlinsen mittelbar axial federnd im Gehäuse angeordnet. Es ist auch möglich, daß - wie bei dem Ausführungsbeispiel in Figur 7 - das Galilei-Fernrohr bzw. dessen einteiliger Linsenkörper 25' selbst, also unmittelbar axial federnd in einem Bohrungsabschnitt 9' des Gehäuses 3' gelagert wird. In diesem Fall ist kein Tubus für das Linsenfernrohr vorgesehen und die Feder 23' direkt in einem Arbeitsgang an den einteiligen zum Beispiel aus Polymethylmethacrylat (PMMA) bestehenden Linsenkörper 25' anspritzbar. Im übrigen unterscheidet sich das Ausführungsbeispiel in Figur 7 von den bisher beschriebenen Ausführungsbeispielen noch geringfügig in der konkreten Ausbildung des Gehäuses 3' und des Steckers 2'. Ansonsten ist hier jedoch ebenfalls die oben bereits beschriebene Einkopplungsanordnung vorgesehen.

Schließlich sind noch weitere Abwandlungen denkbar. So ist es möglich, daß anstelle des Linsenfernrohrs der oder die EO-Wandler innerhalb des optischen Steckverbinders axial federnd gelagert ist bzw. sind.

Alle Ausführungsbeispiele weisen einen parallelen Strahlengang zwischen der aktiven Diodenfläche und dem gefederten Fernrohr auf, welches wiederum durch die gefederte Anordnung immer optimal axial zu der Lichtleitfaser ausgerichtet ist.

### Bezugszeichenliste

- 1: = Lichtleitfaser
- 2, 2': = Stecker
- 3, 3': = Gehäuse
- 4: = EO-Wandler
- 5: = Photodiode
- 6: = optisches System
- 7: = Halter
- 8, 8': = erster Bohrungsabschnitt
- 9, 9': = zweiter Bohrungsabschnitt
- 10, 10': = dritter Bohrungsabschnitt
- 11: = Tubus
- 12, 13: = Linsen (Kepler-Fernrohr)
- 12', 13': = Linsen (Galilei-Fernrohr)
- 14: = Boden
- 15: = Lichdurchtrittsöffnung
- 16: = Stufe
- 17: = Durchtrittsöffnung
- 18: = Hals
- 19: = Steckerkörper
- 20: = Gehäusewandung
- 21: = Ausnehmung
- 22: = Rastnase
- 23, 23': = Feder
- 25, 25': = Linsenkörper (Galilei-Fernrohr; afokale Linse)
- 26, 27: = optische Wirkfläche

## Patentansprüche

1. Anordnung zur Einkopplung von Licht, mit einem zwischen einer Lichtleitfaser (1) und einem elektrooptischen (EO-)Wandler (4) angeordneten optischen System (6),
**dadurch gekennzeichnet**, daß
das optische System (6) aus einem Linsenfernrohr (12, 13; 12', 13'; 25; 25') besteht.

2. Anordnung nach Anspruch 1,
**dadurch gekennzeichnet**, daß
das Linsenfernrohr (12, 13) von einem Kepler-Fernrohr gebildet ist.

3. Anordnung nach Anspruch 1,
**dadurch gekennzeichnet**, daß
das Linsenfernrohr (12', 13') von einem Galilei-Fernrohr gebildet ist.

4. Anordnung nach Anspruch 3,
**dadurch gekennzeichnet**, daß
das Galilei-Fernrohr auf zwei optische Flächen reduziert und von einem einzigen Linsenkörper (25, 25') mit einer konkaven und einer konvexen optischen Wirkfläche (26 bzw. 27) gebildet ist ( 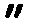 afokale Linse").

5. Anordnung nach einen der vorhergehenden Ansprüche,
**dadurch gekennzeichnet,** daß
die Linsen (12, 13; 12', 13'; 25; 25') des Fernrohrs in einer mechanisch starren Funktionseinheit (11) zusammengefaßt sind.

6. Anordnung nach einem der vorhergehenden Ansprüche,
**dadurch gekennzeichnet**, daß
eine Linse oder mehrere Linsen (12, 13; 12', 13'; 25; 25') des Fernrohrs aus einem optisch transparenten Polymer, zum Beispiel aus Polymethylmethacrylat (PMMA), besteht bzw. bestehen.

7. Anordnung nach Anspruch 5 oder 6,
**dadurch gekennzeichnet,** daß
die Linsen (12, 13; 12', 13'; 25; 25') direkt in einen Träger der mechanisch starren Funktionseinheit (11) eingespritzt sind.

8. Anordnung nach Anspruch 5 oder 6,
**dadurch gekennzeichnet,** daß
der Träger der mechanisch starren Funktionseinheit (11) durch Umspritzen der Linse(n) mit einem Polymer direkt gebildet ist.

9. Anordnung nach einem der vorhergehenden Ansprüche,
**gekennzeichnet durch**
die Anwendung einer oder mehrerer asphärisch gekrümmter optischer Fläche(n).

10. Optischer Steckverbinder
**gekennzeichnet durch**
die Anwendung einer Anordnung nach einem der Ansprüche 1 bis 9.

11. Optischer Steckverbinder nach Anspruch 10,
**dadurch gekennzeichnet,** daß
mindestens eine Linse (25') des Fernrohrs axial federnd innerhalb des optischen Steckverbinders gelagert ist.

12. Optischer Steckverbinder nach Anspruch 11,
**dadurch gekennzeichnet,** daß
die die Linse tragende mechanisch starre Funktionseinheit (11) selbst innerhalb des optischen Steckverbinders axial federnd gelagert ist.

13. Optischer Steckverbinder nach Anspruch 10,
**dadurch gekennzeichnet,** daß
der oder die EO-Wandler (4) innerhalb des optischen Steckverbinders axial federnd gelagert ist bzw. sind.

14. Optischer Steckverbinder nach einem der Ansprüche 11 bis 13,
**dadurch gekennzeichnet,** daß
eine Feder (23') direkt in einem Arbeitsgang an einem axial federnd gelagerten Teil des Fernrohrs angebracht ist.

15. Optischer Steckverbinder nach einem der Ansprüche 10 bis 14,
**dadurch gekennzeichnet,** daß
die Lichtleitfaser (1) in einem Stecker (2, 2') und der EO-Wandler (4) sowie das Fernrohr in einem mit dem Stecker kuppelbaren Gehäuse (3, 3') angeordnet sind.

16. Optischer Steckverbinder nach Anspruch 15,
**dadurch gekennzeichnet,** daß
der Stecker (2, 2') und das Gehäuse (3, 3') miteinander verrastbar sind.

17. Optischer Steckverbinder nach Anspruch 15 oder 16,
**dadurch gekennzeichnet,** daß
das Fernrohr in einem axial federnd in eine Bohrung (9) des Gehäuses (3) gelagerten Tubus (11) als mechanisch starre Einheit angeordnet ist und daß der EO-Wandler (4) in einen Halter (7) eingesetzt ist, der starr in der Gehäusebohrung (8) angeordnet ist und gegen die Feder (23) anliegt.

18. Optischer Steckverbinder nach einem der Ansprüche 15 bis 17,
**dadurch gekennzeichnet,** daß
das Gehäuse (3, 3') mit einer weiteren (10) Bohrung zur Aufnahme des Steckers (2, 2') ausgebildet ist.
